Europäisches Patentamt

European Patent Office

Office européen des brevets

(19)

(11) Veröffentlichungsnummer: **0 022 172**
**B1**

(12) **EUROPÄISCHE PATENTSCHRIFT**

(45) Veröffentlichungstag der Patentschrift:
08.12.82

(21) Anmeldenummer: 80103042.0

(22) Anmeldetag: 31.05.80

(51) Int. Cl.³: **C 01 G 1/02,** C 01 B 13/22,
**C 01 B 33/18**

(54) Verfahren zur Herstellung feinstteiliger Oxide von Metallen.

(30) Priorität: 07.06.79 DE 2923064

(43) Veröffentlichungstag der Anmeldung:
14.01.81 Patentblatt 81/2

(45) Bekanntmachung des Hinweises auf die Patenterteilung:
08.12.82 Patentblatt 82/49

(84) Benannte Vertragsstaaten:
**BE DE FR GB**

(56) Entgegenhaltungen:
**DE-A-2 153 671**
**DE-A-2 533 925**
**DE-C-1 150 955**

(73) Patentinhaber: Degussa Aktiengesellschaft,
Weissfrauenstrasse 9, D-6000 Frankfurt am Main 1 (DE)

(72) Erfinder: Heckel, Emil, Dr., Rooiendamiaan 15,
B-2190 Essen (DE)
Erfinder: Seys, Freddy, Du Boislaan 12,
D-2130 Brasschaat (DE)
Erfinder: Baeckelmans, René, Kloosterstraat 25,
B-2660 Willebroek (BE)
Erfinder: Heilmann, Wolfgang, Dr., Oberneulander
Landstrasse 201, D-2800 Bremen (DE)

## Verfahren zur Herstellung feinstteiliger Oxide von Metallen

Die Erfindung betrifft ein Verfahren zur Herstellung feinstteiliger Oxide von Metallen und/oder des Siliciums durch hydrolytische Umsetzung der flüchtigen Chloride der Metalle und/oder des Siliciums in einer Flamme, wobei man die Chloride im Gemisch mit unter Wasserbildung verbrennenden Gase und Luft bzw. Sauerstoff einer aus einem Brenner in einem Reaktionsraum abbrennenden Flamme zuführt und zur Umsetzung bringt und anschließend das gebildete Oxidaerosol zusammen mit dem Restgas ein nachfolgendes Kühlsystem durchlaufen läßt und in einer Abscheidungsvorrichtung von dem Restgas abtrennt.

Bei der Herstellung feinstteiliger Oxide von Metallen und/oder des Siliciums durch hydrolytische Umsetzung der flüchtigen Chloride der Metalle und/oder des Siliciums in einer Flamme entsteht zwangsläufig als Nebenprodukt Chlorgas, welches aus dem Restgas der Reaktion entfernt werden muß.

Aus der DE-A-2 533 925 (Degussa) ist bekannt, daß man das bei der Flammreaktion gebildete Chlor mit Wasserstoff während des Abkühlens unterhalb der Reaktionstemperatur von Wasserstoff mit dem in dem Restgas enthaltenden Sauerstoff reduziert.

Dieses Verfahren weist jedoch den Nachteil auf, daß das damit erhaltene Restgas noch bis zu 300 mg/$Nm^3$ Chlor enthalten kann. Die Reduzierung dieses Restchlorgehaltes auf einen Wert von <10 mg/$Nm^3$ Chlor durch Absorption mit Natronlauge erweist sich wegen der Anwesenheit von Kohlendioxid als kaum durchführbar und unökonomisch.

Kohlendioxid entsteht durch die Verwendung von Organochlorsilanen als Ausgangsstoff und/oder durch kohlenstoffhaltige Brenngase. Das entstandene Kohlendioxid wird in Konkurrenz zu dem elementaren Chlor absorbiert, so daß niedrige Chlorgehalte des Restgases nur durch Einsatz von großen Alkalimengen und mehreren hintereinandergeschalteten Absorbtionseinrichtungen, wie z. B. Waschtürme, erreicht werden können.

Die Aufgabe der vorliegenden Erfindung besteht nun darin, den Restchlorgehalt des Abgases auf einen Wert von <10 mg/$Nm^3$ in wirtschaftlich vertretbarer Weise zu verringern.

Gegenstand der Erfindung ist ein Verfahren zur Herstellung feinstteiliger Oxide von Metallen und/oder des Siliciums durch hydrolytische Umsetzung der flüchtigen Chloride der Metalle und/oder des Siliciums in einer Flamme, wobei man die Chloride im Gemisch mit unter Wasserbildung verbrennenden Gase und Luft bzw. Sauerstoff einer aus einem Brenner in einem Reaktionsraum abbrennenden Flamme zuführt und zur Umsetzung bringt, anschließend das gebildete Oxidaerosol zusammen mit dem Restgas ein nachfolgendes Kühlsystem durchlaufen läßt und in einer Abscheidungsvorrichtung von dem Restgas abtrennt, welches dadurch gekennzeichnet ist, daß man das bei der Flammenreaktion gebildete, in dem Restgas enthaltende Chlor mit wäßriger Lösung eines Reduktionsmittels umsetzt.

Als Reduktionsmittel können z. B. Wasserstoffperoxid, Natriumhydrogensulfit oder Natriumthiosulfat verwendet werden. Es können auch andere bekannte Reduktionsmittel eingesetzt werden. Jedoch bieten die genannten Reduktionsmittel den Vorteil, daß sie die geringsten Abwasserprobleme mit sich bringen.

In einer bevorzugten Ausführungsform der Erfindung kann als Reduktionsmittel Wasserstoffperoxid in einer 0,1 bis 1,0 molaren wäßrigen Lösung eingesetzt werden. Es können aber auch höher konzentrierte Lösungen, wie z. B. 30%iges Wasserstoffperoxid, zudosiert werden, wobei die Menge entsprechend anzugleichen ist.

Nach dem erfindungsgemäßen Verfahren kann die wäßrige Lösung des Wasserstoffperoxids der Umwälzung eines Waschturmes, z. B. saugseitig der Pumpe zugeführt werden. Dabei können 30 bis 50 l/h, vorzugsweise 40 l/h Wasserstoffperoxidlösung (0,5 molar) eingespeist werden. Dem Waschturm können am Kopfende 50 bis 200 l/h Wasser mit einem pH-Wert von 6 bis 8 zugeführt werden, während am unteren Ende das Prozeßabgas in einer Menge von 1800 bis 3500 $Nm^3$/h, vorzugsweise 1800 bis 3000 $Nm^3$/h, eingegeben wird.

In einer erfindungsgemäßen Ausführungsform kann die Menge der zugesetzten Wasserstoffperoxidlösung der in dem Restgas vorhandenen Menge an Chlor derart angepaßt werden, daß die Konzentration an Wasserstoffperoxid nach der Umsetzung in dem Ablauf 0,05 Mol/l beträgt.

Die Temperatur des Wassers kann 10 bis 30° C und die Temperatur des Restgases 30 bis 50° C betragen.

Das Restgas kann einen maximalen Chlorgehalt von 300 bis 500 mg/$Nm^3$ aufweisen. Es ist jedoch ohne weiteres möglich, Restgas mit einem höheren Chlorgehalt aufzuarbeiten. So kann der Chlorgehalt beispielsweise 1 g/$Nm^3$ betragen, wobei dann die einzusetzende Menge an Reduktionsmittel, wie z. B. Wasserstoffperoxid, anzugleichen ist.

In einer Ausführungsform der Erfindung kann man die Umsetzung des Chlors mit wäßriger Lösung eines Reduktionsmittels durchführen, nachdem ein Teil des Chlors durch Absorption in Alkalilaugen entfernt worden ist.

In einer bevorzugten Ausführungsform kann das erfindungsgemäße Verfahren durchgeführt werden, nachdem man einen Teil des Chlors mit Wasserstoff während des Abkühlens unterhalb der Reaktionstemperatur von Wasserstoff mit dem in dem Restgas enthaltenden Sauerstoff reduziert hat.

Das erfindungsgemäße Verfahren weist den Vorteil auf, daß der Restchlorgehalt des Prozeßabgases auf einen Wert von weniger als 10 mg/Nm³ gebracht werden kann.

Das erfindungsgemäße Verfahren kann vor allem dann vorteilhaft verwendet werden, wenn das Restgas größere Mengen an Kohlendioxid enthält, wobei jede der genannten Varianten des erfindungsgemäßen Verfahrens angewandt werden kann.

Das erfindungsgemäße Verfahren kann auch bei einer analogen Herstellung von Metalloxiden wie Oxiden des Titans oder Aluminiums angewandt werden.

Das erfindungsgemäße Verfahren wird anhand der folgenden Beispiele näher erläutert und beschrieben.

Beispiel 1

Eine 0,5molare wäßrige Lösung von Wasserstoffperoxid wird in einer Menge von 40 l/h mit einer Dosierpumpe saugseitig der Pumpe in den Wasserkreislauf des Waschturmes eingespeist. Am Kopf des Waschturmes werden 100 l/h Wasser mit einer Temperatur von 20°C und am unteren Ende des Waschturmes Restgas in einer Menge von 3000 Nm³/h und mit einem Gehalt an Chlor von 300 mg/Nm³ eingegeben.

Das von dem Waschturm ablaufende Wasser weist einen pH-Wert von 0,9 auf und enthält 0,05 Mol $H_2O_2$ und 3,5 g HCl pro Liter.

Am Kopfende des Waschturmes enthält das so behandelte Restgas nur noch 3 mg/Nm³ Chlor.

Beispiel 2

Eine 0,25molare wäßrige $Na_2S_2O_3$-Lösung wird in einer Menge von 40 l/h mit einer Dosierpumpe saugseitig der Pumpe in den Wasserkreislauf des Waschturmes eingespeist. Am Kopf des Waschturmes werden 100 l/h Wasser mit einer Temperatur von 20°C und am unteren Ende des Waschturmes Restgas mit einer Menge von 3000 Nm³/h und mit einem Gehalt an Chlor von 300 mg/Nm³ eingegeben.

Das von dem Waschturm ablaufende Wasser weist einen pH-Wert von 1,9 auf und enthält noch 0,04 Mol/l $Na_2S_2O_3$ sowie geringe Mengen kolloidalen Schwefels.

Am Kopfende des Waschturmes enthält das so behandelte Restgas nur noch 8 mg/Nm³ Chlor.

**Patentansprüche**

1. Verfahren zur Herstellung feinstteiliger Oxide von Metallen und/oder des Siliciums durch hydrolytische Umsetzung der flüchtigen Chloride der Metalle und/oder des Siliciums in einer Flamme, wobei man die Chloride im Gemisch mit unter Wasserbildung verbrennenden Gasen und Luft bzw. Sauerstoff einer aus einem Brenner in einem Reaktionsraum abbrennenden Flamme zuführt und zur Umsetzung bringt, anschließend das gebildete Oxidaerosol zusammen mit dem Restgas ein nachfolgendes Kühlsystem durchlaufen läßt und in einer Abscheidevorrichtung von dem Restgas abtrennt, dadurch gekennzeichnet, daß man das bei der Flammreaktion gebildete in dem Restgas enthaltende Chlor mit wäßriger Lösung eines Reduktionsmittels umsetzt.

2. Verfahren nach Anspruch 1, dadurch gekennzeichnet, daß man die Umsetzung des Chlors mit wäßriger Lösung eines Reduktionsmittels durchführt, nachdem ein Teil des Chlors durch Absorption in Alkalilauge entfernt worden ist.

3. Verfahren nach Anspruch 1, dadurch gekennzeichnet, daß man die Umsetzung des Chlors mit wäßriger Lösung eines Reduktionsmittels durchführt, nachdem ein Teil des Chlors mit Wasserstoff während des Abkühlens unterhalb der Reaktionstemperatur von Wasserstoff mit dem im Restgas enthaltenden Sauerstoff reduziert worden ist.

4. Verfahren nach dem Anspruch 1, 2 oder 3, dadurch gekennzeichnet, daß man die Umsetzung des Chlors mit wäßriger Lösung eines Reduktionsmittels in Gegenwart von Kohlendioxid durchführt.

**Claims**

1. A process for the production of very finely divided oxides of metals and/or silicon by the hydrolytic reaction of the volatile chlorides of the metals and/or silicon in a flame, in which process the chlorides, in admixture with gases which burn with the formation of water, and in admixture with air or oxygen, are supplied to and reacted in a flame burning from a burner in a reaction chamber, the oxide aerosol which has formed is then allowed to pass through a subsequent cooling system together with the residual gas and is separated from the residual gas in a separating apparatus, characterised in that the chlorine which is formed during the flame reaction and is contained in the residual gas is reacted with an aqueous solution of a reducing agent.

2. A process according to claim 1, characterised in that the chlorine is reacted with the aqueous solution of a reducing agent after some of the chlorine has been removed by absorption in alkali.

3. A process according to claim 1, characterised in that the chlorine is reacted with the aqueous solution of a reducing agent after some of the chlorine has been reduced with hydrogen while cooling to below the reaction temperature of hydrogen with the oxygen contained in the residual gas.

4. A process according to claims 1, 2 or 3, characterised in that the chlorine is reacted with the aqueous solution of a reducing agent in the presence of carbon dioxide.

**Revendications**

1. Procédé pour la fabrication d'oxydes, à particules très fines, de métaux et/ou de silicium par réaction hydrolytique du chlorure volatil du métal et/ou du silicium dans une flamme, où l'on amène le chlorure, en mélange avec un gaz qui dégage de l'eau à la combustion, et avec de l'air ou de l'oxygène, dans une flamme provenant d'un brûleur et brûlant dans un volume réactionnel, et où l'on fait réagir ce chlorure, puis on fait passer l'aérosol d'oxyde formé, en commun avec le gaz résiduel, à travers un réfrigérant monté en aval, et on le sépare du gaz résiduel dans un dispositif séparateur, procédé caractérisé en ce que l'on fait réagir le chlore formé lors de la réaction dans la flamme, et contenu dans le gaz résiduel, avec la solution aqueuse d'un agent réducteur.

2. Procédé selon la revendication 1, caractérisé en ce que l'on effectue la réaction du chlore avec la solution aqueuse d'un agent réducteur, après qu'une partie du chlore ait été éliminée par absorption dans une lessive alcaline.

3. Procédé selon la revendication 1, caractérisé en ce que l'on effectue la réaction du chlore avec la solution aqueuse d'un agent réducteur, après qu'une partie du chlore ait été réduite avec de l'hydrogène durant le refroidissement en dessous de la température de la réaction de l'hydrogène avec l'oxygène contenu dans le gaz résiduel.

4. Procédé selon l'une quelconque des revendications 1 à 3, caractérisé en ce que l'on effectue la réaction du chlore avec la solution aqueuse d'un agent réducteur, en présence de dioxyde de carbone.